# EUROPÄISCHE PATENTSCHRIFT

(11) **EP 2 605 993 B1**
(45) Veröffentlichungstag und Bekanntmachung des Hinweises auf die Patenterteilung: **02.03.2016**
(21) Anmeldenummer: 11726404.4
(22) Anmeldetag: 15.06.2011
(51) Int. Cl.: B66B 7/06, D07B 1/22, D07B 5/00, F16G 1/12, F16G 1/28, D07B 1/16

(54) **FLACHRIEMEN, INSBESONDERE FÜR EINE AUFZUGSANLAGE**
FLAT BELT, IN PARTICULAR FOR AN ELEVATOR INSTALLATION
COURROIE PLATE, EN PARTICULIER POUR UN SYSTÈME D'ASCENSEUR

(30) Priorität: 20.08.2010 DE 102010037089
(43) Veröffentlichungstag der Anmeldung: 26.06.2013
(73) Patentinhaber: ContiTech Antriebssysteme GmbH, 30165 Hannover (DE)
(72) Erfinder: GÖSER, Hubert, 29451 Dannenberg (DE)
(74) Vertreter: Finger, Karsten
(86) Internationale Anmeldenummer: PCT/EP2011/059892
(87) Internationale Veröffentlichungsnummer: WO 2012/022517

(56) Entgegenhaltungen:
- EP-A2- 1 396 458

## Beschreibung

Die Erfindung betrifft einen Flachriemen, insbesondere für eine Aufzugsanlage, sowie einen Flachriementrieb aus diesem Flachriemen mit wenigstens einer ballig ausgebildeten Traktionsscheibe.

Flachriemen für Aufzugsanlagen sind bekannt. Flachriemen sind kraftschlüssige Antriebsriemen und zeichnen sich dadurch aus, dass sie einen in etwa rechteckigen Querschnitt aufweisen, also breiter als hoch sind. Sie liegen mit ihrer ebenen Breitseite auf der ballig ausgeführten Riemenscheibe auf, um einen stabilen Lauf zu gewährleisten. Flachriemen weisen mehrere in einer Ebene nebeneinander liegende Zugträger auf, welche beabstandet zueinander in dem Riemenkörper aus Elastomermaterial eingebettet und vollständig von dem Elastomermaterial umhüllt sind. Die Ebene der Zugträger - im Querschnitt des Flachriemens betrachtet - liegt mittig im Riemenkörper und ist somit beabstandet zur Kontaktfläche, die der Flachriemen mit der ebenen Oberfläche seiner Breitseite bei Auflage auf der ebenen Oberfläche der Traktionsscheibe ausbildet. Über diese Kontaktfläche werden die Traktionskräfte übertragen.

Aus der EP 1 396 458 A2 ist ein vorgenannter Flachriemen bekannt geworden, der auf seiner auf die Traktionsscheibe auflegbaren Kontaktfläche zumindest eine in etwa in Längsrichtung des Flachriemens verlaufende Nut aufweist, durch welche der Flachriemen in Einzelspuren gegliedert ist. Um eine sichere Führung zu gewährleisten, läuft dieser Riemen auf einer den Nuten komplementär ausgebildeten Rillenscheibe.

Durch die Nut ist zudem eine unerwünschte Geräuschentwicklung, wie beispielsweise ein als sehr unangenehm empfundenes Pfeifgeräusch während des Betriebes des Flachriemens auf einer vorzugsweise ballig ausgeführten Riemenscheibe durch Verdrängung von Luft aus dem Einlaufkeil vermieden, welcher im Einlauf des Flachriemens zwischen der ebenen Kontaktoberfläche des Flachriemens und der Traktionsscheibe entsteht. Die sonst verdrängte Luft wird zum Teil in dieser Nut komprimiert und wird nicht geräuschentwickelnd verdrängt Zudem ist erreicht, dass die der Traktion dienende Kontaktoberfläche des Flachriemens weitgehend frei von Schmutz ist und über die Lebensdauer des Riemens gute Traktionseigenschaften aufweist, weil sich Dreck in der Nut sammeln und anlagern kann.

Der Erfindung liegt die Aufgabe zugrunde, einen Flachriemen der eingangs geschilderten Art zu schaffen, der in Bezug auf seine Traktionseigenschaften weiter verbessert ist.

Die Aufgabe wird dadurch gelöst, dass die Kontaktfläche jeder Einzelspur - im Querschnitt der Einzelspur betrachtet - durch eine konvex, konkav oder dachförmig ausgeführte Überhöhung überhöht ausgeführt ist, derart, dass die Kontaktfläche jeder Einzelspur im unbelasteten Zustand 20% - 70% derjenigen Fläche einnimmt, auf die diese Fläche unter maximaler Nutzlast durch eine Verformung der Überhöhung vergrößerbar ist.

Die Begriffe "Kontaktfläche" und "Traktionsfläche" sind Synonyme.
Der Begriff " maximale Nutzlast" meint die laut Herstellerangabe angegebene maximale Nutzlast des Flachriemens.
Der Begriff "unbelasteter Zustand" meint die Last des Eigengewichtes ohne Nutzlast.

Es ist eine lastabhängige Traktionsfläche durch die Anordnung der unter Last verformbaren Überhöhungen geschaffen, durch die eine an die Last anpassbare Größe der Kontaktfläche für eine zuverlässige Traktion zur Verfügung gestellt ist. Denn in unbelastetem Zustand des Riemens ist die Kontaktfläche durch die Anordnung der Überhöhungen klein, während das Leervolumen des Flachriemens groß ist. Die Kontaktfläche des Riemens weist im unbelasteten Zustand eine Größe zwischen 20% und 70% der Größe der Kontaktfläche unter maximaler Nutzlast auf. Unter Last verformen sich die Überhöhungen derart, dass die Kontaktfläche vergrößert, das Leervolumen aber verringert wird. Unter maximaler Nutzlast sind die Überhöhungen derart verformt, dass die Größe der Kontaktfläche 100% beträgt und sich über die gesamte Breite einer Einzelspur(traktionsfläche) erstreckt. So steht unter geringer Last eine kleinere Kontaktfläche und ein großes Leervolumen zur Verfügung, während unter größerer Last eine größere Kontaktfläche und ein geringeres Leervolumen zur Verfügung steht. Es ist eine lastabhängige Flachriemenoberfläche geschaffen, mit der zuverlässig Geräuschbildung verminderbar ist und mit der eine variable Kontaktflächengröße für eine zuverlässige Traktion zur Verfügung gestellt ist.

Vorteilhaft ist es, wenn die Überhöhung eine Höhe von 1% bis 30 %, vorzugsweise 2% bis 10% der Breite der Einzelspurkontaktfläche aufweist. Insbesondere bei Verwendung von Polyurethan als Elastomer des Flachriemens im Härtebereich zwischen 85 und 95 ShoreA ist die gewünschte Verformung unter maximaler Nutzlast zu erhalten.

Zweckmäßig ist es, wenn die Nut eine Höhe aufweist, die 0,05 bis 0,5 x der Höhe des Flachriemens, vorzugsweise 0,1 bis 0,3 x der Höhe des Flachriemens entspricht. Die Kombination aus Höhe und Breite der Nut soll einen genügend großen Querschnitt für die Abführung der Luft, des Schmutzes und/oder der Feuchtigkeit bereitstellen. Die Höhen der Nuten innerhalb eines Riemens können variieren.

Die Nut kann verschiedenste Querschnittskonturen aufweisen. Wesentlich ist, dass die Querschnittskontur der Nut derart gestaltet ist, dass einerseits Luftgeräusche zuverlässig vermieden sind und dass andererseits sich Schmutz in den Nuten ansammeln kann. Beispielsweise kann die Nut eine Querschnittkontur aufweisen, die einer Teilkreisform entspricht. Ebenfalls kann die Nut eine Querschnittkontur aufweisen, die einer V-Form oder einer U-Form entspricht, wobei sich das V oder U in Richtung Flachriemenmitte verjüngt. So kann die Nut auch eine Querschnittkontur aufweisen, die einem Viereck, vorzugsweise einem Trapez oder einem Rechteck entspricht, wobei sich das Trapez in Richtung Flachriemenmitte verjüngt. Die Nut kann ebenfalls beispielsweise wellenförmige oder zickzackförmige Amplituden (senkrecht zur Längserstreckung der Nut verlaufende Ausschläge) aufweisen und derart ein größeres Leer-Nut-Volumen zur Verfügung stellen.

Erfindungsgemäß ist die Kontaktfläche je nach Ausführung um 0,5% bis 50%, bevorzugt um 5% bis 10% kleiner als bei Flachriemen mit ebener Kontaktoberfläche ohne Nut.

Besonders vorteilhaft ist es, wenn zusätzlich zu den Längsnuten Quernuten angeordnet sind. Durch die Quernuten kann Luft, Schmutzes und/oder Feuchtigkeitsfilme wie Kondensat seitlich abtransportiert werden. Die Tiefe der Quernuten ist dadurch begrenzt, dass die Nutzen nicht in die Zugträgerebene reichen dürfen.

Besonders laufgeräuschoptimiert ist der Flachriemen dann, wenn die Quernuten in unregelmäßig Abständen und/oder Winkeln über die Längserstreckung des Flachriemens angeordnet sind. Hierdurch ist die zu Schwingungen und Geräuschen führende Resonanzanregung vermieden.

Wesentlich ist, dass der Riemen durch die Nutenanordnung nicht merklich in seiner Quersteifigkeit reduziert werden darf. Denn der Riemen soll auf einer Scheibe mit nur einer Balligkeit laufen.

Die vorbeschriebenen Nuten können ebenfalls auf der Rückenseite des Riemens angeordnet sein.

Vorteilhaft ist es, wenn die Breite einer Einzelspur geringer als die Höhe des Zugmittels ist. Der Riemen sollte möglichst schmal und kompakt ausgeführt sein, d.h. die Korde sollten möglichst dicht beieinander liegen, wodurch die Breite der Einzelspur geringer als die Höhe des Zugmittels ist.

Zweckmäßig ist es, wenn das Elastomer des Flachriemens ein Polyurethan ist. Polyurethan weist sowohl gute Reib- als auch gute Hafteigenschaften auf und ist relativ unempfindlich gegen Scherung. Weiterhin ist es zweckmäßig, wenn die Festigkeitsträger Stahlkorde sind. Stahl vereint eine hohe Zugfestigkeit und Biegewechselfestigkeit mit einer, bei entsprechender Vorbehandlung, guten Haftfähigkeit an Elastomer.

Der erfindungsgemäße Flachriementrieb, welcher insbesondere in einer Aufzugsanlage einsetzbar ist, zeichnet sich dadurch aus, dass dieser aus einem vorbeschriebenen Flachriemen und einer eine Balligkeit aufweisenden Traktionsscheibe besteht, durch welche der Flachriemen antreibbar ist.

"Einzelspur" bedeutet eine Spur in Längsrichtung des Flachriemens, welche von Nutmitte bis zu Nutmitte der benachbarten Nut bzw. zur Längskante des Riemens gebildet wird. "Einzelspurtraktionsfläche" ist die Fläche der Einzelspur, die Kontakt auf der Traktionsscheibe hat.

Anhand der Zeichnungen, die schematische Ausführungsbeispiele darstellen, wird nachstehend die Erfindung näher erläutert. Es zeigten die:
- Fig.1: eine dreidimensionale Ansicht eines erfindungsgemäßen Flachriemens mit Längsnuten und dachförmigen Überhöhungen;
- Fig. 2: einen Querschnitt durch den Flachriemen der Fig.1;
- Fig. 3a-3d: verschiedene Nutquerschnittsformen.

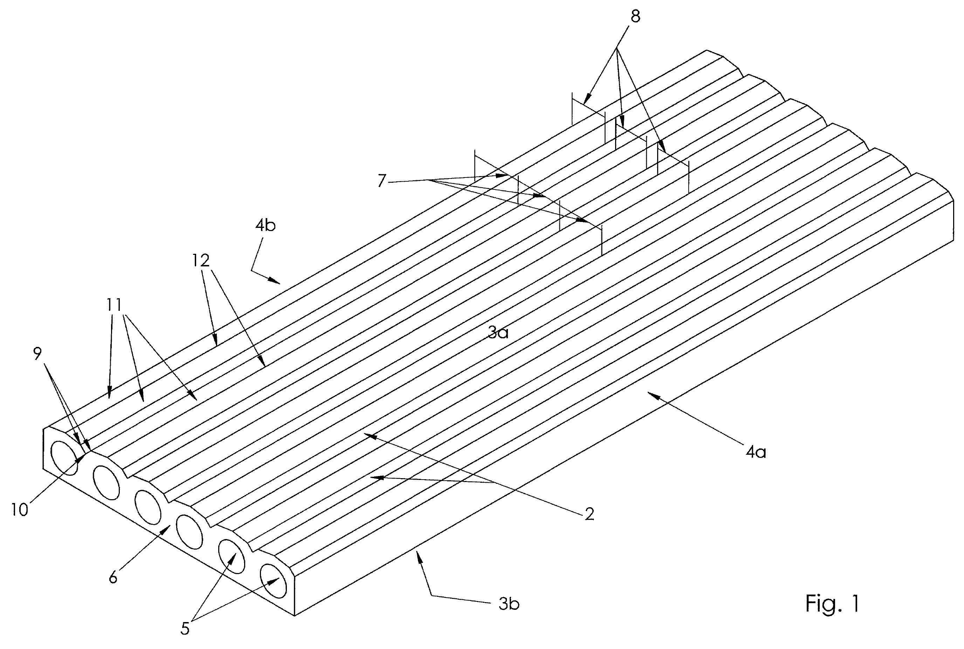

Die **Fig.1** zeigt eine dreidimensionale Ansicht eines erfindungsgemäßen Flachriemens 1 mit Längsnuten 2. Der Flachriemen 1 ist insbesondere in einer Aufzugsanlage einsetzbar, wobei der Flachriemen 1 durch eine ballig ausgebildete Traktionsscheibe (nicht dargestellt) antreibbar ist. Der Flachriemen weist zwei Breitseiten 3a, 3b und zwei Hochseiten 4a, 4b auf. Sechs Stahlkorde 5 sind als Zugträger in Längsrichtung (Pfeil) und beabstandet zueinander in dem Flachriemen 1 angeordnet, dessen Körper 6 aus Polyurethan besteht. Der Flachriemen 1 weist auf seiner der Traktionsscheibe (nicht dargestellt) zuwendtbaren Riemenoberfläche 3a in Längsrichtung des Flachriemens (Pfeil) verlaufende Nuten 2 auf, welche in lotrechter Projektion der Stahlkorde 5 auf diese Riemenoberfläche 3a zwischen den Stahlkorden 5 angeordnet sind. Der Flachriemen 1 ist durch diese Nuten 2 in Einzelspuren 7 gegliedert, deren summierte Einzelspurtraktionsoberflächen 8 eine geringere Fläche als die Traktionsoberfläche ergibt, die über die gesamte Breite einer ebenen Flachriemenoberfläche erhaltbar wäre. Die Kontaktfläche 8 jeder Einzelspur 7 - im Riemenquerschnitt betrachtet - ist durch eine dachförmig ausgeführte Überhöhung 11 überhöht ausgeführt, derart, dass die Kontaktfläche 8 jeder Einzelspur 7 im unbelasteten Zustand 20% - 70% derjenigen Fläche einnimmt, auf die diese Fläche unter maximaler Nutzlast durch eine Verformung der Überhöhung 11 vergrößerbar ist. Der First 12 der dachförmigen Überhöhung 11 verläuft parallel zur Erstreckung einer Längsnut 2.

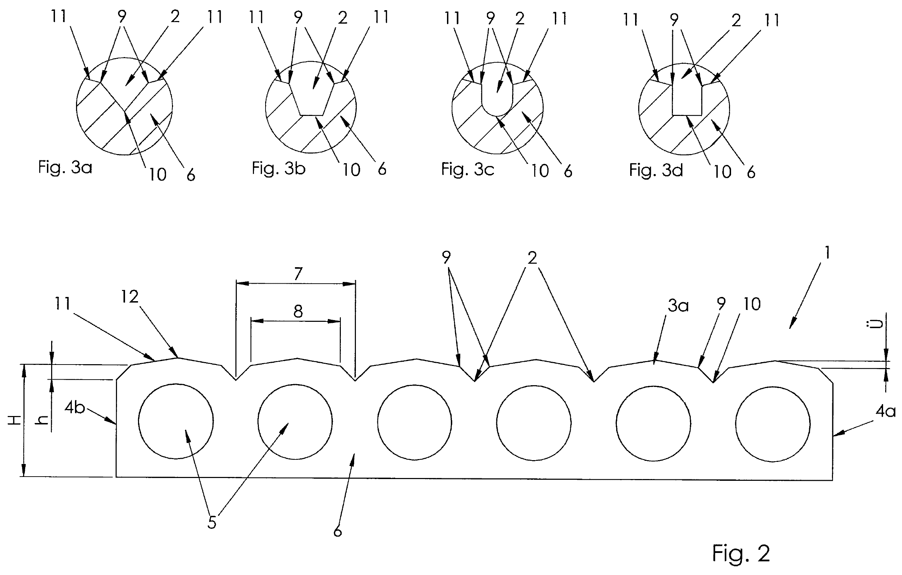

Die **Fig.2** zeigt einen Querschnitt durch den Flachriemen der Fig.1. Gleiche Bauteile sind mit gleichen Bezugszeichen bezeichnet. Die Breite der Einzelspurtraktionsfläche 8 ist 0,9 x der Breite der Einzelspur 7. Die Nut 2 weist eine Höhe h auf, die 0,1x der Höhe H des Flachriemens 1 entspricht. Die Überhöhung ist eine dachförmige Überhöhung 11, wobei der First 12 der dachartigen Überhöhung 11 in Längsrichtung des Flachriemens 1 verläuft. Die Überhöhung weist vom Nutende 9 bis zum First 12 eine Höhe Ü von 10% der Breite der Einzelspurtraktionsfläche 8 auf. Die Höhe Ü der Überhöhung wird anhand eines Lotes beschrieben, welches ausgehend vom First 12 auf derjenigen gedachten Fläche endet, die durch eine durch die Nutenden 12 gelegte Fläche gebildet ist. Das Nutende 9 befindet sich an dem dem Nutgrund 10 gegenüberliegenden Ende der Nut 2 dort, wo eine Konturänderung vom Verlauf der Nut 2 zur Kontur der Überhöhung 12 erfolgt.

In der **Fig.3a - 3d** sind einige der möglichen Querschnittsformen von Nuten 2 dargestellt. In der Fig.3a ist eine V-förmige Nut dargestellt, die in den Flachriemenkörper 6 hineinreicht. Die Fig.3b zeigt eine trapezförmige Nut 2, die Fig.3c eine U-förmige Nut 2 und die Fig.3d eine viereckige Nut 2.

### Bezugszeichenliste

### (Teil der Beschreibung)

- 1: Flachriemen
- 2: Längsnut
- 3a: Breitseite
- 3b: Breitseite
- 4a: Hochseite
- 4b: Hochseite
- 5: Stahlkord
- 6: Flachriemenkörper
- 7: Einzelspur
- 8: Einzelspurtraktionsfläche
- 9: Nutende
- 10: Nutgrund
- 11: dachförmige Überhöhung
- 12: First

- h: Höhe Nut
- H: Höhe Flachriemen
- Ü: Höhe Überhöhung

## Patentansprüche

1. Flachriemen (1), insbesondere für eine Aufzugsanlage, wobei der Flachriemen (1) in Elastomermaterial (6) eingebettete, in Längsrichtung des Flachriemens (1) verlaufende Zugträger (5) aufweist, welche beabstandet voneinander in einer gemeinsamen Ebene angeordnet sind, wobei der Flachriemen (1) auf seiner auf die Traktionsscheibe auflegbaren Kontaktfläche (3a) zumindest eine in etwa in Längsrichtung des Flachriemens verlaufende Nut (2) aufweist, durch welche der Flachriemen (1) in Einzelspuren (7) gegliedert ist,
**dadurch gekennzeichnet, dass** die Kontaktfläche (8) jeder Einzelspur - im Querschnitt der Einzelspur (7) betrachtet - durch eine konvex, konkav oder dachförmig ausgeführte Überhöhung (11) überhöht ausgeführt ist, derart, dass die Kontaktfläche (8) jeder Einzelspur (7) im unbelasteten Zustand 20% - 70% derjenigen Fläche einnimmt, auf die diese Fläche unter maximaler Nutzlast durch eine Verformung der Überhöhung (11) vergrößerbar ist.

2. Flachriemen (1) nach Anspruch 1, **dadurch gekennzeichnet, dass** die Überhöhung (11) eine Höhe von 1% bis 30 %, vorzugsweise 2% bis 10% der Breite der Einzelspurkontaktfläche aufweist.

3. Flachriemen (1) nach Anspruch 1 oder 2, **dadurch gekennzeichnet, dass** die Nut (2) eine Höhe (h) aufweist, die 0,05 bis 0,5 x der Höhe des Flachriemens (H), vorzugsweise 0,1 bis 0,3 x der Höhe des Flachriemens (H) entspricht.

4. Flachriemen (1) nach einem oder mehreren der vorangehenden Ansprüche, **dadurch gekennzeichnet, dass** die Nut (2) eine Querschnittkontur aufweist, die einer Teilkreisform oder einer V-Form oder einer U-Form entspricht, wobei sich die Nut (2) zur Flachriemenmitte hin verjüngt.

5. Flachriemen (1) nach einem oder mehreren der Ansprüche 1 - 3, **dadurch gekennzeichnet, dass** die Nut (2) eine Querschnittkontur aufweist, die einem Viereck, vorzugsweise einem Trapez oder einem Rechteck entspricht, wobei sich das Trapez in Richtung Flachriemenmitte verjüngt.

6. Flachriemen (1) nach einem der vorangehenden Ansprüche, **dadurch gekennzeichnet, dass** die Nut (2) wellenförmige oder zickzackförmige Amplituden aufweist.

7. Flachriemen (1) nach einem der vorangehenden Ansprüche, **dadurch gekennzeichnet, dass** Quernuten angeordnet sind und dass vorzugsweise die Quernuten einen Winkel zwischen >1° und <89°, vorzugsweise zwischen 10° und 60° mit der Querrichtung einschließen und dass vorzugsweise die Quernuten in unregelmäßig Abständen über die Längserstreckung des Flachriemens (1) angeordnet sind.

8. Flachriemen (1) nach wenigstens einem der vorstehenden Ansprüche, **dadurch gekennzeichnet, dass** das Elastomer (3, 4) ein Polyurethan ist.

9. Flachriemen (1) nach wenigstens einem der vorstehenden Ansprüche, **dadurch gekennzeichnet**, das die Breite der Kontaktfläche (8) der Einzelspur 0,995 bis 0,5 x der Breite der Einzelspur (7), vorzugsweise 0,98 bis 0,8 x der Breite der Einzelspur (7), besonders bevorzugt 0,95 bis 0,9 x der Breite der Einzelspur (7) ist.

10. Flachriemen (1) nach wenigstens einem der vorstehenden Ansprüche, **dadurch gekennzeichnet, dass** die Breite einer Einzelspur (7) geringer als die Höhe des Flachriemens (H) ist.

11. Flachriementrieb, insbesondere für eine Aufzugsanlage, mit einem Flachriemen (1) gemäß einem oder mehrerer der Ansprüche 1 - 10 und wenigstens einer eine Balligkeit aufweisenden Traktionsscheibe, durch welche der Flachriemen (1) antreibbar ist.

## Claims

1. Flat belt (1), in particular for an elevator installation, the flat belt (1) having tension members (5), which are embedded in elastomer material (6) and run in the longitudinal direction of the flat belt (1) and which are arranged spaced apart from one another in a common plane, the flat belt (1) having on its contact face (3a), which can be placed onto the traction pulley, at least one groove (2), which runs approximately in the longitudinal direction of the flat belt and by means of which the flat belt (1) is divided into individual tracks (7),
**characterized in that** the contact face (8) of each individual track - viewed in the cross section of the individual track (7) - is designed to be elevated by a convex, concave or roof-shaped elevation (11), in such a way that the contact face (8) of each individual track (7) in the unloaded state takes up 20% - 70% of that area to which this area can be increased by deformation of the elevation (11) under the maximum live load.

2. Flat belt (1) according to Claim 1, **characterized in that** the elevation (11) has a height of 1% to 30%, preferably 2% to 10%, of the width of the contact face of the individual tracks.

3. Flat belt (1) according to Claim 1 or 2, **characterized in that** the groove (2) has a height (h) that corresponds to 0.05 to 0.5 x the height of the flat belt (H), preferably 0.1 to 0.3 x the height of the flat belt (H).

4. Flat belt (1) according to one or more of the preceding claims, **characterized in that** the groove (2) has a cross-sectional contour that corresponds to the form of a pitch circle or the form of a V or the form of a U, the groove (2) tapering towards the middle of the flat belt.

5. Flat belt (1) according to one or more of Claims 1 - 3, **characterized in that** the groove (2) has a cross-sectional contour that corresponds to a quadrilateral, preferably a trapezoid or a rectangle, the trapezoid tapering in the direction of the middle of the flat belt.

6. Flat belt (1) according to one of the preceding claims, **characterized in that** the groove (2) has amplitudes in the form of a wave or in the form of a zigzag.

7. Flat belt (1) according to one of the preceding claims, **characterized in that** transverse grooves are arranged and **in that** the transverse grooves preferably form an included angle with the transverse direction of between >1° and <89°, preferably between 10° and 60°, and **in that** the transverse grooves are preferably arranged at irregular intervals over the longitudinal extent of the flat belt (1) .

8. Flat belt (1) according to at least one of the preceding claims, **characterized in that** the elastomer (3, 4) is a polyurethane.

9. Flat belt (1) according to at least one of the preceding claims, **characterized in that** the width of the contact area (8) of the individual track is 0.995 to 0.5 × the width of the individual track (7), preferably 0.98 to 0.8 × the width of the individual track (7), with particular preference 0.95 to 0.9 × the width of the individual track (7).

10. Flat belt (1) according to at least one of the preceding claims, **characterized in that** the width of an individual track (7) is smaller than the height of the flat belt (H).

11. Flat belt drive, in particular for an elevator installation, with a flat belt (1) according to one or more of Claims 1 - 10 and at least one traction pulley, which has a crowning and by which the flat belt (1) can be driven.

## Revendications

1. Courroie plate (1), en particulier pour un système d'ascenseur, la courroie plate (1) présentant des supports de traction (5) noyés dans un matériau élastomère (6), s'étendant dans la direction longitudinale de la courroie plate (1), qui sont disposés à distance les uns des autres dans un plan commun, la courroie plate (1) présentant, sur sa surface de contact (3a) pouvant être placée sur la poulie de traction, au moins une rainure (2) s'étendant approximativement dans la direction longitudinale de la courroie plate, laquelle divise la courroie plate (1) en traces individuelles (7),
**caractérisée en ce que** la surface de contact (8) de chaque trace individuelle - considérée dans la section transversale de la trace individuelle (7) - est réalisée de manière rehaussée par un rehaussement (11) réalisé sous forme convexe, concave ou en forme de toit, de telle sorte que la surface de contact (8) de chaque trace individuelle (7), dans l'état non sollicité, occupe 20%-70 % de la surface sur laquelle cette surface peut être accrue en cas de charge utile maximale par une déformation du rehaussement (11).

2. Courroie plate (1) selon la revendication 1, **caractérisée en ce que** le rehaussement (11) présente une hauteur de 1 % à 30 %, de préférence de 2 % à 10 % de la largeur de la surface de contact de la trace individuelle.

3. Courroie plate (1) selon la revendication 1 ou 2, **caractérisée en ce que** la rainure (2) présente une hauteur (h) qui correspond à 0,05 à 0,5 x la hauteur de la courroie plate (H), de préférence qui correspond à 0,1 à 0,3 x la hauteur de la courroie plate (H).

4. Courroie plate (1) selon l'une quelconque ou plusieurs des revendications précédentes, **caractérisée en ce que** la rainure (2) présente un contour en section transversale qui correspond à une forme de cercle partiel ou une forme en V ou une forme en U, la rainure (2) se rétrécissant vers le centre de la courroie plate.

5. Courroie plate (1) selon l'une quelconque ou plusieurs des revendications 1 à 3, **caractérisée en ce que** la rainure (2) présente un contour en section transversale qui correspond à un quadrilatère, de préférence un trapèze ou un carré, le trapèze se rétrécissant dans la direction du centre de la courroie plate.

6. Courroie plate (1) selon l'une quelconque des revendications précédentes, **caractérisée en ce que** la rainure (2) présente des amplitudes en forme d'onde ou en forme de zigzag.

7. Courroie plate (1) selon l'une quelconque des revendications précédentes, **caractérisée en ce que** les rainures transversales sont prévues et **en ce que** de préférence les rainures transversales forment un angle compris entre > 1° et < 89°, de préférence entre 10° et 60° avec la direction transversale et **en ce que** de préférence les rainures transversales sont disposées à intervalles irréguliers sur l'étendue longitudinale de la courroie plate (1).

8. Courroie plate (1) selon au moins l'une quelconque des revendications précédentes, **caractérisée en ce que** l'élastomère (3, 4) est un polyuréthane.

9. Courroie plate (1) selon au moins l'une quelconque des revendications précédentes, **caractérisée en ce que** la largeur de la surface de contact (8) de la trace individuelle vaut 0,995 à 0,5 x la largeur de la trace individuelle (7), de préférence 0,98 à 0,8 x la largeur de la trace individuelle (7), particulièrement préférablement 0,95 à 0,9 x la largeur de la trace individuelle (7).

10. Courroie plate (1) selon au moins l'une quelconque des revendications précédentes, **caractérisée en ce que** la largeur de la trace individuelle (7) est inférieure à la hauteur de la courroie plate (H).

11. Entraînement à courroie plate, en particulier pour une installation d'ascenseur, comprenant une courroie plate (1) selon l'une quelconque ou plusieurs des revendications 1 à 10, et au moins une poulie de traction présentant un bombement, laquelle permet d'entraîner la courroie plate (1).
